**Europäisches Patentamt**

**European Patent Office**

**Office européen des brevets**

(11) Veröffentlichungsnummer: **0 291 746**
**A1**

## (12) EUROPÄISCHE PATENTANMELDUNG

(21) Anmeldenummer: **88106868.8**

(22) Anmeldetag: **29.04.88**

(51) Int. Cl.⁴: **C22B 7/02 , C02F 11/00**

(30) Priorität: **18.05.87 DE 3716646**

(43) Veröffentlichungstag der Anmeldung:
**23.11.88 Patentblatt 88/47**

(84) Benannte Vertragsstaaten:
**AT BE CH FR GB LI NL**

(71) Anmelder: **Dumont, Eugen, Dr.**
**Am Bienenstock 8**
**D-6000 Frankfurt am Main 60(DE)**

(72) Erfinder: **Dumont, Eugen, Dr.**
**Am Bienenstock 8**
**D-6000 Frankfurt am Main 60(DE)**

(74) Vertreter: **Schubert, Siegmar, Dipl.-Ing. et al**
**Patentanwälte Dr. V. Schmied-Kowarzik Dr.**
**P. Weinhold Dr.-Ing. G. Dannenberg Dr. D.**
**Gudel Dipl.-Ing. S. Schubert Dr. P. Barz**
**Grosse Eschenheimer Strasse 39**
**D-6000 Frankfurt am Main 1(DE)**

(54) **Verfahren zur Entfernung von Metallen aus Erden, Stäuben und Schlämmen.**

(57) Um die Abtrennung möglichst vollständig durchzuführen, erfolgt sie durch Lösen in niederen, aliphatischen Carbonsäuren mit bis zu 7 Kohlenstofatomen in der Molekülkette.

EP 0 291 746 A1

## Verfahren zur Entfernung von Metallen aus Erden, Stäuben und Schlämmen.

Die Erfindung bezieht sich auf ein Verfahren zur Entfernung von Metallen aus Erden, Stäuben und Schlämmen.

Durch Reste und Abgänge aus Produktionsprozessen früherer Jahre haben sich Metalle als Elemente, Legierungen oder Salze im Erdreich oder in Flußbetten abgelagert. Bei Ausbaggerungen wird dieses verseuchte Erdreich auf Sonderdeponien verbracht. Eine unbeschränkte andere Lagerung oder Verwendung ist dagegen weitgehend ausgeschlossen. Ähnlich verhält es sich bei Aschen und Filterstäuben von Müllverbrennungsanlagen oder von Energieerzeugungsbetrieben.

Derart mit Schwermetallen verseuchte Erde kann auch eine Vielzahl von organischen Stoffen enthalten, welche bei Anwendung von anorganischen Säuren, die bekannterweise zur Lösung und Abtrennung der Schwermetalle verwendet werden, teilweise zu unerwünschten Produkten abgebaut werden.

Solche Abbauprodukte sind oft schleimiger Natur und erschweren die Filtration der Schwermetallösung, weiterhin können sie zu unerwünschten Koagulationen führen, durch die Schwermetalle eingeschlossen und zurückgehalten werden.

Die besonders zur Entfernung der Schwermetalle verwendete Salzsäure führt bei Anwesenheit von Blei, besonders wenn ein höherer Bleigehalt der Erden vorliegt, zu ungenügender Auslaugung, da das mit Salzsäure gebildete Bleichlorid in Wasser schwer löslich ist.

Um die Schwermetalle weitgehender aus Erden, Stäuben und Schlämmen bei vergleichsweise geringem Aufwand zu beseitigen, wurde erfindungsgemäß herausgefunden, daß gesättigte, niedere aliphatische Carbonsäuren bis zu 7 Kohlenstoffatomen in der Molekülkette zur Lösung und Auslaugung der Schwermetalle aus Erden und dgl. sehr gut geeignet sind.

Besonders bevorzugt können Methansäure, Äthansäure oder Propionsäure oder deren Mischungen angewendet werden. Diese Säuren sind in jedem Verhältnis untereinander und in Wasser mischbar. Sie werden in konzentrierter Form, besser aber in mehr oder weniger mit Wasser verdünnter Form für die Lösung der Metalle angewendet.

Die Metalle Aluminium, Blei, Cadmium, Calzium, Chrom, Eisen, Kupfer, Kobalt, Magnesium, Mangan, Nickel, Quecksilber und Titan werden von den genannten Säuren oder deren Mischungen gelöst, wobei die Metalle beim Löseprozeß in beliebiger Bindung, zum Beispiel als Oxide, Hydroxide, Carbonate oder auch als Chloride vorliegen können.

Der Lösungsprozeß wird beschleunigt durch Erwärmen, bei dem jedoch eine Temperatur über 60° C keine weiteren, wesentlichen Vorteile bietet.

Zur zweckmäßigen Verwendung verdünnter Carbonsäure oder Säuremischung kann die Konzentration zwischen 10% bis 55% gehalten werden, besonders aber in den Grenzen zwischen 15% bis 55%. In Sonderfällen kann aber auch der Einsatz konzentrierter Carbonsäure oder deren Mischungen geboten sein. Wasser zur Verdünnung der Carbonsäuren kann direkt den Säuren zugesetzt sein, kann aber auch nachgeführt werden. Wasser kann aber auch in den Erden und Schlämmen als Feuchte vorliegen.

Die Carbonsäuremischung Methansäure, Äthansäure und Propionsäure kann gut im Verhältnis von 1:1:1 eingestellt sein, es ist aber auch jedes andere Verhältnis anwendbar.

Binäre Carbonsäuremischungen von Methansäure und Äthansäure sind ebenfalls in jedem Verhältnis einsetzbar, wenn in dem jeweiligen Anwendungsfall nicht nur eine Carbonsäure vorteilhaft ist.

Die Durchführung des Verfahrens soll an folgendem Beispiel zur Abscheidung von Eisen, Blei und Chrom als vorliegende Metalle beschrieben werden.

Ausgehobene Erde, durchsetzt mit Holzstücken, Gras und Pflanzenresten, kleinen Steinen und Bauschutt in einer Korngröße nicht über 10 mm wurde nach dem Verfahren behandelt.

Das Material hatte eine Feuchte von 5% und wurde in einen Rührkessel eingefüllt. Unter Erwärmen auf 60° C wird eine Mischung von 90% Äthansäure und 10% Methansäure zugegeben, worauf mit Wasser im Verhältnis von 1:3 verdünnt wird. Nach einer Einwirkungszeit der verdünnten Carbonsäuren von 15 Minuten wird die behandelte Mischung auf ein Vakuumfilter abgelassen, und kurz mit Wasser nachgewaschen.

Als Rückstand auf dem Filter hinterbleibt die Erde mit den oben genannten Beimischungen, welche unverändert aus dem Löseprozeß hervorgehen. Die Schwermetalle befinden sich in vollkommen gelöster Form im ablaufenden Filtrat.

In einem speziellen Fall, auf den im gesamten die obige Beschreibung zutrifft, wurden 2,65 kg Erde als Baustellenaushub, verunreinigt mit Eisen, Blei und Chrom, mit 9 Liter einer verdünnten Säure, deren Gehalt an Carbonsäure 3 Liter betrug, behandelt.

Nach Aufarbeitung wurden erhalten:
Rückstand, Erde usw.    2,44 kg
Metallsalze    0,18 kg

An verdünnter Säure wurden als Überschuß rückgeführt    7,50 Liter

Das Verhältnis der abtetrennten Metalle ergab sich durch Analyse zu Blei 80%, Chrom 9% und Eisen 11%.

Die Prüfung des Rückstands auf Schwermetalle ergab Werte, welche unter der Toleranzgrenze lagen.

In gleicher Weise können auch Stäube, beispielsweise Elektrofilterstäube aus Energiegewinnungsprozessen behandelt werden. Dasselbe gilt für Aschen und Stäuben aus der Müllverbrennung.

Stäube aus Müllverbrennungsanlagen enthalten eine Vielzahl von Metallen.

Ein solcher Filterstaub, der nach einer vorher durchgeführten Analyse die Metalle Aluminium, Blei, Chrom, Cadmium, Eisen, Kupfer, Magnesium, Nickel, Quecksilber, Zinn und Zink enthielt, wurde wie folgt behandelt:

1 kg des Elektrofilterstaubes wurde mit 3,5 Liter einer 50%-igen wässrigen Äthansäure unter Rühren bei maximal 55° C während einer Dauer von 20 Minuten behandelt. Nach Abfiltrieren der gelösten Metalle und kurzem Auswaschen des Rückstandes, der vorzugsweise aus Silikaten bestand, konnten keine metallischen Anteile im Rückstand nachgewiesen werden. Die Prüfung ergab für alle vorher genannten Metalle entweder völlige Abwesenheit oder jedenfalls Werte unter den zulässigen Toleranzen.

## Ansprüche

1. Verfahren zur Entfernung von Schwermetallen und deren Salze aus Stäuben, Erden und Schlämmen,
**gekennzeichnet durch**
Lösung und Auslaugung mit niederen, alipatischen Carbonsäuren mit bis zu 7 Kohlenstoffatomen in der Molekülkette.

2. Verfahren nach Anspruch 1,
**gekennzeichnet durch**
die Verwendung von Methansäure, Äthansäure oder Propionsäure.

3. Verfahren nach Anspruch 1 oder 2,
**gekennzeichnet durch**
Verwendung von wässrigen, verdünnten Carbonsäuren.

4. Verfahren nach den Ansprüchen 1 und 2 oder 1 und 3,
**gekennzeichnet durch**
ein Verdünnungsverhältnis Carbonsäure : Wasser, das vorzugsweise im Bereich zwischen 1:1 bis 1:3 liegt.

5. Verfahren nach den Ansprüchen 1 bis 4,
**gekennzeichnet durch**
die Verwendung von Mischungen aus zwei oder drei Carbonsäuren in beliebigen Verhältnissen untereinander.

6. Verfahren nach Anspruch 5,
**gekennzeichnet durch**
die Verwendung von Mischungen von Methansäure, Äthansäure und Propionsäure.

7. Verfahren nach den Ansprüchen 1 bis 6,
**dadurch gekennzeichnet,**
daß es unter Erwärmung der Reaktionsmischung auf Temperaturen bis zu 60° C durchgeführt wird.

Europäisches
Patentamt

# EUROPÄISCHER RECHERCHENBERICHT

Nummer der Anmeldung

EP 88 10 6868

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 242 351 (METALLGESELLSCHAFT) <br> * Seite 5, Zeilen 11-16 * <br> --- | 1 | C 22 B 7/02 <br> C 02 F 11/00 |
| A | DE-A-2 911 399 (DAMBACH-WERKE) <br> * Ansprüche 1,6 * <br> --- | 1 | |
| A | DE-A-3 309 772 (GOEMA) <br> * Anspruch 1 * <br> --- | 1 | |
| A | DE-A-2 305 645 (PURMETALL) <br> * Ansprüche 1,3 * <br> --- | 1 | |
| A | DE-C- 750 429 (GLAZUNOV) <br> * Anspruch 1 * <br> --- | 1 | |
| A | US-A-2 187 750 (MARVIN) <br> * Seite 6, Zeilen 34-50 * <br> ----- | 1 | |

|  |  |
|---|---|
|  | RECHERCHIERTE SACHGEBIETE (Int. Cl.4) <br><br> C 22 B 7/02 <br> C 02 F 11/00 |

Der vorliegende Recherchenbericht wurde für alle Patentansprüche erstellt

| Recherchenort | Abschlußdatum der Recherche | Prüfer |
|---|---|---|
| BERLIN | 27-06-1988 - | SUTOR W |